# EUROPÄISCHE PATENTANMELDUNG

(11) **EP 3 985 283 A1**
(43) Veröffentlichungstag der Anmeldung: **20.04.2022**
(21) Anmeldenummer: 21000277.0
(22) Anmeldetag: 01.10.2021
(51) Int. Cl.: F16H 55/18

(54) **SPIELFREIE VERZAHNUNG**

(30) Priorität: 15.10.2020 DE 102020006332
(71) Anmelder: Brehm, Bernhard, 75265 Calw-Stammheim (DE); Just, Manfred, 76709 Kronau (DE); Fetzner, Roland, 76646 Bruchsal (DE)
(72) Erfinder: Brehm, Bernhard, 75265 Calw-Stammheim (DE)
(74) Vertreter: Ludewig, Rita

(57) **Zusammenfassung**

Die Erfindung betrifft eine spielfreie Verzahnung für Antriebe von Anlagen verschiedenster technischer Bereiche. Es war Aufgabe eine spielfreie Verzahnung zu finden, die gewährleistet, dass radial und spielfrei miteinander fest vorverspannte Zahnscheiben auf einer Nabe montiert sind, auf ein Gegenzahnrad zu übertragen und ein ununterbrochenes Wälzen der Zahnflanken von Zahnscheiben an den Zahnflanken des Gegenzahnrades zu gewährleisten. Die Erfindung ist gekennzeichnet durch eine Zahnscheibe, die am Außenumfang eine asymmetrische Evolventen- Verzahnung aufweist und einseitig und unterhalb der Verzahnung mit einer Federscheibe mit zahnlosem Außenumfang und radialen spiralförmigen Federflächen formschlüssig verbunden ist und dass eine zweite Zahnscheibe mit Federscheibe der vorbeschriebenen Art, entgegengesetzt der Drehrichtung angeordnet ist, mit denen ein Zahnscheibenpaar mit gegeneinander gerichteter radialer Vorspannung und einer am Außenumfang spielfreien, symmetrischen Evolventen- Verzahnung zu bilden ist und durch fortlaufende Anordnung weiterer derartiger Zahnscheibenpaare, immer entgegen der Drehrichtung als Zahnwalze über einen mittigen Durchbruch auf einer zentralen Nabe fest zu verbinden sind.

## Beschreibung

Die Erfindung betrifft eine spielfreie Verzahnung für Antriebe von Anlagen verschiedenster technischer Bereiche, wie beispielsweise in der Medizintechnik, in Robotik- Automatisierungs- Systemen, im 3D-Druck, beim Laser- und Plasmaschneiden, im Werkzeugmaschinenbau, in Handling-Systemen, standardisierten Pick & Place Systemen etc. zu nutzen sind.

Es ist eine Vielzahl von spielfreien Zahnrädern bekannt. So offenbart die Offenlegungsschrift DE 25 28 466 A1 ein spielfreies Zahnrad bestehend aus zwei aufeinander liegenden Scheiben, die mit übereinstimmenden, im Ruhezustand gegeneinander winkelversetzen Verzahnungen versehen und elastisch gegeneinander verdrehbar sind, so dass die Verzahnungen im Eingriffszustand bei im wesentlichen fluchtender Anordnung gegeneinander verspannt sind, dadurch gekennzeichnet, dass die Scheiben durch einen außermittig angeordneten axialen Zapfen in einer eine Federung in peripherer Richtung zulassenden Weise miteinander verbunden sind und die beiden Scheiben außermittig angeordnete Bohrungen aufweisen, die zur Bildung des federnden Zapfens mit einer gummielastischen Kunststoffmasse ausgegossen sind, zwischen den Scheiben eine Gleitschicht angeordnet ist die einen mit den Bohrungen fluchtenden Durchbruch aufweist, die beiden Scheiben auf einer Nabe sitzen, wobei die eine Scheibe fest mit der Nabe verbunden und die andere mit Spiel auf der Nabe gelagert ist. Das die Nabe nach einer Seite hin zwei Ringschultern bildet, wobei die feste Scheibe zwischen einer Ringschulter mit kleinerem Durchmesser und einem gebördelten Nabenrand gehalten ist und die zweite Scheibe zwischen der Gleitschicht und der zweiten Ringschulter mit größerem Durchmesser sitzt und die Nabe anschließend an die Ringschulter mit größerem Durchmesser ein Ritzel bildet.

Nachteilig an dieser, in verschiedenen konstruktiven Varianten offenbarten Lösung ist es, dass eine Spannung zwischen den Scheiben durch einen federnden Zapfen erreicht wird, der zwischen den Scheiben einen Versatz der symmetrischen Verzahnung bewirkt, aber auch auf der Nabe einen Achsversatz der Scheiben zur Folge hat, was wiederum zu einem Spiel der Scheiben und deren Achsen, sowie auch bei der Verzahnung wieder zu einem Spiel führt.

Es ist auch ein Zahnrad für spielfreien Zahntrieb bekannt, dazu beansprucht die Auslegeschrift DE 1 268 447 A ein Zahnrad für einen spielfreien Zahntrieb, insbesondere für die Abstimmung von Empfängern der Funkempfangstechnik, dadurch gekennzeichnet, dass es mit längs wenigstens zwei zur Zahnradachse konzentrischer Kreise angeordneten Schlitzen versehen ist, die durch gegenseitig versetzte Stege unterbrochen sind. Das Zahnrad wird dadurch radial nachgiebig, so dass, das mit einem Gegenzahnrad kämmende, erfindungsgemäße Zahnrad radial mit dem Gegenzahnrad beweglich verspannt ist.

Auch bei dieser Lösung, greift die symmetrische Verzahnung des einen Zahnrades in die symmetrische Verzahnung des Gegenzahnrades ein. Durch den dabei, nicht vermeidbaren Versatz der beiden Zahnradachsen wird die Spielfreiheit des erfindungsgemäßen Zahnrads zum Teil wieder aufgehoben und es entsteht wieder ein Spiel zwischen den ineinander greifenden symmetrischen Zahnreihen, sie können demzufolge nicht wälzen.

In dem Gebrauchsmuster DE 1 888 004 U wird ein spielfreies Zahnrad beansprucht, dass durch eine, gleichachsig zu ihm angeordnete, ebenfalls in die Verzahnung des Gegenzahnrates eingreifende und mit Feder belastete Zahnscheibe formschlüssig an den Zahnflanken des Gegenzahnrades anliegend gehalten wird, dadurch gekennzeichnet, dass die Federn zur Belastung der Zahnscheibe aus längs geschlitzten Hülsen aus Federstahlblech bestehen, die in achsparallelen, sowohl das Zahnrad als auch die Zahnscheibe durchsetzenden Bohrungen angeordnet sind.

Bei diese Lösung wird der Versatz der Verzahnungen des Zahnrades und der Zahnscheibe in einer Vorrichtung durch Verschiebung der Zahnscheibe in Umfangsrichtung erreicht, auf den Flansch aufgesetzt und in dieser Stellung des Zahnrades und der Zahnscheibe werden die Bohrungen auf dem Umfang des Zahnrades hergestellt und dann die Hülsen als Federn eingesetzt. Ein kompliziertes Herstellungsverfahren, das viele Faktoren beinhaltet, die wiederum zu einem schwer zu beeinflussenden Spiel zwischen der Verzahnung des Zahnrades und der Zahnscheibe führt.

Es war deshalb Aufgabe der Erfindung, eine spielfreie Verzahnung zu schaffen, die gewährleistet, dass radial und spielfrei miteinander fest vorverspannte Zahnscheiben auf einer Nabe zu montieren sind, ohne ihre vor der Montage erzeugte Spielfreiheit verlieren zu können und die Spielfreiheit auf ein Gegenzahnrad zu übertragen, derart, dass ein durchgängiges Wälzen der Zahnflanken der Zahnscheiben unbeeinflussbar an den Zahnflanken des Gegenzahnrades gesichert ist.

Die Aufgabe wird mit den Merkmalen des Anspruchs 1 gelöst, indem eine Evolventen- Verzahnung am Außenumfang jeder Zahnscheibe asymmetrisch angeordnet ist, einseitig auf einer Kreisfläche und unterhalb der asymmetrischen Evolventen- Verzahnung der Zahnscheibe achsparallel eine Federscheibe, mit einem zahnlosen glatten Außenumfang, Öffnungen, mit darunter in radialer Richtung zu einer mittigen Aufnahmeöffnung, mehreren beabstandeten spiralförmig verlaufenden Federflächen, die über Verbindungsbolzen mit jeder Zahnscheibe formschlüssig verbunden ist und eine zweite Zahnscheibe der vorbeschriebenen Art, entgegengesetzt der Drehrichtung der ersten Zahnscheibe und der ersten Federscheibe angeordnet ist, mit denen ein Zahnscheibenpaar mit gegeneinander gerichteter radialer Vorspannung und einer am Außenumfang spielfreien, symmetrischen Evolventen- Verzahnung zu bilden ist, das einen mit Bohrungen fluchtenden mittigen Durchbruch aufweist, der mit der zentralen Nabe fest zu verbinden ist.

Besonders hervorzuheben ist die erfindungsgemäße asymmetrische Anordnung der Evolventen- Verzahnung am Außenumfang der Zahnscheiben, die durch die achsparallele formschlüssige Verbindung mit jeweils einer am Außenumfang zahnlosen Federscheibe, der Zahnscheibe eine vorher berechenbare Vorspannung verleiht. Durch die entgegen der Drehrichtung angeordnete zweite Zahnscheibe mit der, ebenfalls entgegen der Drehrichtung angeordneten zweiten Federscheibe werden zwei Zahnscheiben mit entgegengesetzter Vorspannung miteinander zu einem Zahnscheibenpaar mit symmetrischer Verzahnung verbunden, die zueinander eine entgegengesetzt wirkende Vorspannung aufweisen und so eine derartige Kraft erzeugen, dass die durch die, entgegen der Drehrichtung erfolgte Anordnung der Zahnscheiben, entstandene symmetrische Evolventen- Verzahnung absolut spielfrei arbeitet. Diese Spielfreiheit wird so auch auf die Achsanordnung der Zahnscheibenpaare auf der Nabe übertragen. Darüber hinaus wird durch die fortlaufende Anordnung weiterer beschriebener Zahnscheibenpaare, immer entgegengesetzt der jeweiligen letzten Drehrichtung des vorangegangenen Zahnscheibenpaares, eine in ihrer Breite der Anwendung anzupassende Zahnwalze aus mehreren Zahnscheibenpaaren mit einer am Außenumfang angeordneten, spielfreien Verzahnung mit radialer Vorspannung gebildet und die Zahnflanken der symmetrischen Evolventen- Verzahnung mehrerer Zahnscheibenpaare sind gegen die Zahnflanken des Gegenzahnrades und dessen Evolventen- Verzahnung unter radialer Vorspannung anzulegen, wodurch diese gegen die Zahnflanken des Gegenzahnrads spielfrei zu wälzen sind. Es kann kein Spiel zwischen Zahnwalze und Gegenzahnrad entstehen.

Hervorzuheben ist, gemäß Anspruch 2, die erfindungsgemäße Federscheibe, die eine kreisflächenförmige Scheibe mit einer, stirnseitig am Außenumfang angeordneten, zahnlosen glatten Außenkante und einer mittig angeordneten Aufnahmeöffnung ist, zwischen denen unterhalb der glatten Außenkante verlaufende, mehrere beabstandete Öffnungen und darunter in radialer Richtung zur Aufnahmeöffnung mehrere spiralförmig verlaufende Federflächen angeordnet sind, wobei die Öffnungen zur formschlüssigen Verbindung der Federscheibe mit den Verbindungsbolzen der jeweiligen Zahnscheibe und die mittige Aufnahmeöffnung zur spielfreien, achsparallelen Aufnahme der Federscheibe zur Zahnscheibe auf der Nabe vorgesehen ist und die Federflächen durch berechenbare Anzahl, Abstände und Kurvenführung zur Erzeugung der jeweils erforderlichen radialen Vorspannung der Zahnscheibe anzupassen sind. Durch die separate spiralförmige Beweglichkeit der erfindungsgemäßen Federscheibe auf der ersten Zahnscheibe richtet sie die radiale Vorspannung der ersten Zahnscheibe gegen die folgende, gegen die Drehrichtung der ersten Zahnscheibe angeordnete, zweite Zahnscheibe mit entgegen gerichteter radialer Vorspannung der zweiten Federscheibe. Diese Gegenwirkung erzeugt die Kraft zur Schaffung der Spielfreiheit der symmetrischen Evolventen- Verzahnung eines Zahnscheibenpaares.

Besonders vorteilhaft ist auch die Zahnwalze, gemäß Anspruch 3, die auf ihrem stirnseitigen Außenumfang eine durchgehende spielfreie symmetrische Evolventen- Verzahnung aufweist, die durch das entgegen der Drehrichtung erfolgte, achsparallele Zusammenfügen von Zahnscheibenpaaren mit symmetrischer Evolventen- Verzahnung und deren radial gegeneinander erzeugte Vorspannung und durch die formschlüssig an diesen angeordneten, Federscheiben mit spiralförmigen Federflächen, und deren spielfreier Verschraubung auf der Nabe zu erzeugen ist.

Das hat den Vorteil, dass die Zahnscheibenpaare mit der spielfreien symmetrischen Verzahnung, diese Spielfreiheit auf eine zentrale Nabe und auf die Evolventen- Verzahnung des jeweiligen Gegenzahnrades übertragen können, unabhängig davon, wie breit die Zahnwalze und das Gegenzahnrad entsprechend ihres Anwendungsbereiches ausgeführt werden.

Hervorzuheben ist auch die Herstellung der spielfreien Verzahnung, gemäß Anspruch 4, die durch die vorherige Berechenbarkeit der erfindungsgemäßen Abmessungen der Zahnscheiben mit der asymmetrischen Verzahnung am Außenumfang, der Federscheiben mit deren Anzahl, Abständen und radialer spiralförmiger Kurvenführung ihrer Federflächen, sowie die dadurch zu erzeugende radiale Vorspannung an den Zahnscheiben für jeden Anwendungsfall und an beliebige Gegenzahnräder mit Evolventen-Verzahnung eine unübersehbare Anwendungsbreite und leichte Herstellung gestattet.

Es ermöglicht die Anwendung der spielfreien Verzahnung auch in Getrieben mit verschiedenen Ebenen und die dort erreichbare durchgängige Spielfreiheit der Zahnräder und ―walzen. Es kann eine kostengünstige Positionierung der spielfrei verzahnten Zahnritzel und Zahnwalzen zum Motor erfolgen.

Die Leerlaufreibung kann so klein wie möglich optimiert werden. Eine durch Achsversatz, eines symmetrisch verzahnten Getriebes beim Stand der Technik, entstehendes Spiel erschwert den Vorgang des Wälzens der Zahnflanken der Zahnräder gegen die Zahnflanken der Gegenzahnräder.

Da die Federvorspannung der erfindungsgemäßen spielfreien Verzahnung größer einstellbar ist, als das Lastmoment des Getriebes, ist dessen Belastbarkeit wesentlich größer als bei Getrieben des bekannten Standes der Technik, ohne, dass sich deren Erwärmung signifikant erhöht.

Schließlich kann die Unstetigkeit in der Steifigkeit eines Getriebes im Getriebespiel, durch die Spielfreiheit unterbunden werden. Durch stabile Spielfreiheit kann auf ein zweites Positions-, Mess- System am Getriebeabtrieb verzichtet werden. Auch auftretende Probleme, die bei häufigen Lastwechseln an Getrieben auftreten und regelungstechnische Probleme, die durch die Steifigkeit des Getriebes an Lastumkehrpunkten entstehen, sind durch die Spielfreiheit zu eliminieren.

Die Erfindung soll nachstehend anhand eines Ausführungsbeispiels beschrieben werden, das in den Zeichnungen näher dargestellt ist. Dabei zeigen:
Fig.1 Vorderansicht einer Zahnscheibe mit asymmetrischer Evolventen-Verzahnung am Außenumfang mit Eingriff in Gegenzahnrad mit Evolventen. Verzahnung,
Fig.2 Vorderansicht auf einen Ausschnitt aus der asymmetrischen Verzahnung einer Zahnscheibe im Eingriff mit der Evolventen- Verzahnung eines Gegenzahnrades,
Fig.3 Vorderansicht einer Federscheibe,
Fig.4 perspektivische Vorderansicht einer Zahnwalze im Eingriff mit einem Gegenzahnrad,
Fig.5 perspektivische Explosionszeichnung einer Zahnwalze mit Zahnscheiben auf denen Federscheiben montiert sind in jeweils drehrichtungsveränderter Darstellung, mit zentraler Nabe, Spannring und Gegenzahnrad,
Fig.6 Vorderansicht einer montierten Zahnwalze mit Federscheiben und Eingriff in ein Gegenzahnrad.

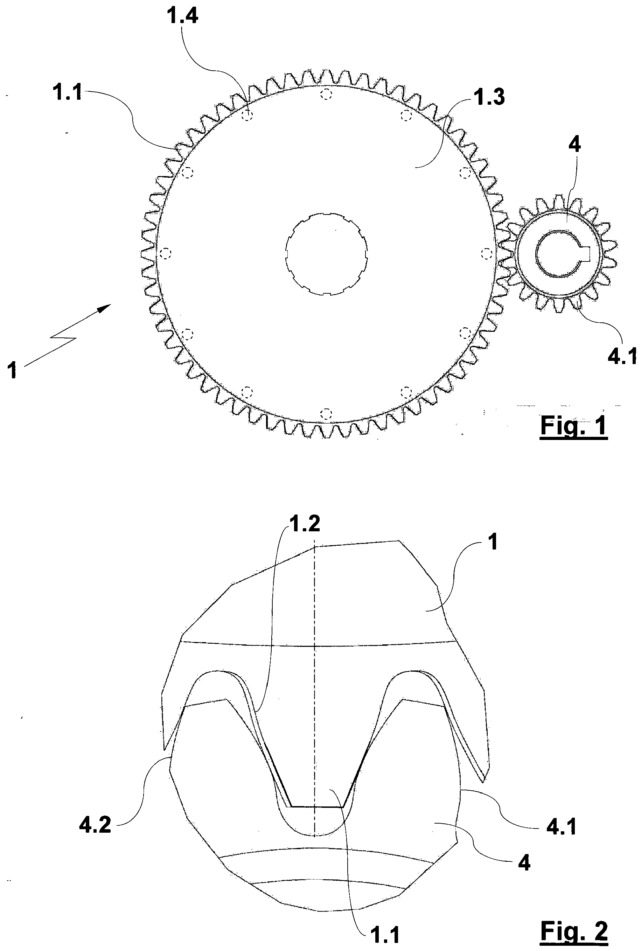

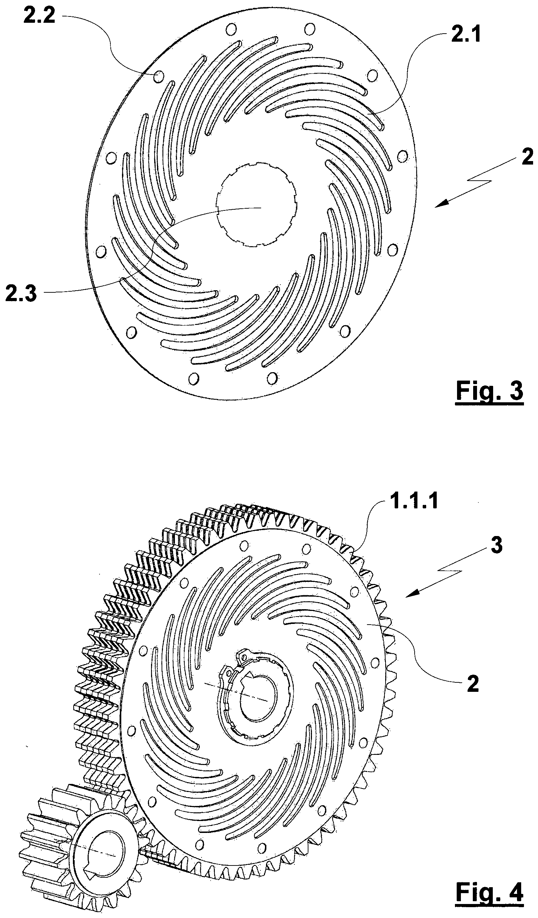

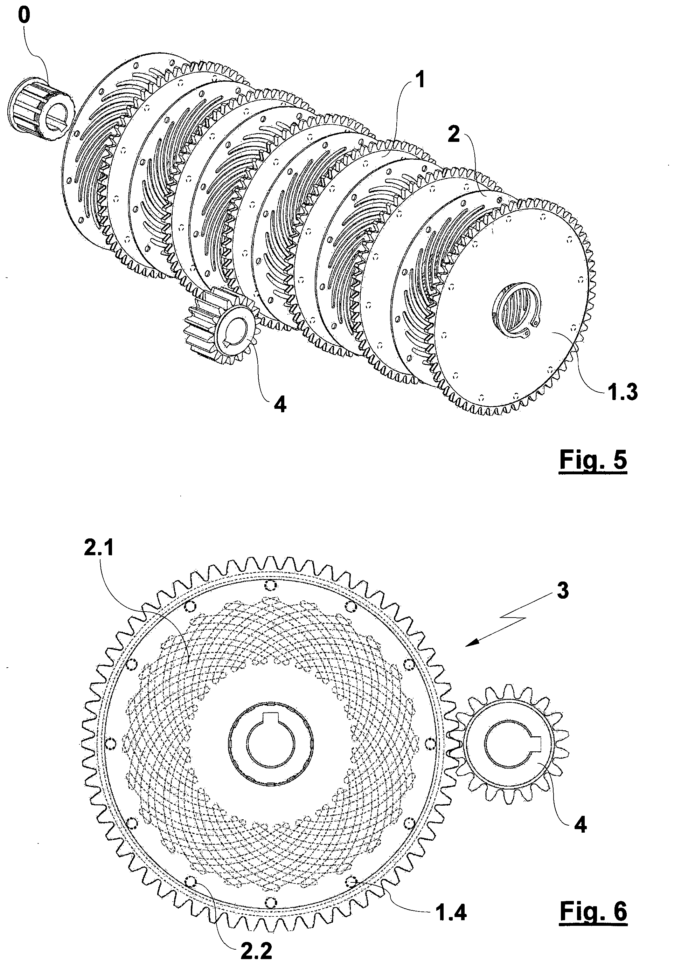

Ein Ausführungsbeispiel zeigt, gemäß Fig.1, eine Zahnscheibe 1, mit asymmetrischer Evolventen- Verzahnung 1.1, gemäß Fig.2, im Eingriff mit einem Gegenzahnrad 4 mit Evolventen- Verzahnung 4.1. Die Zahnscheibe 1 ist einseitig mit unter der Evolventen- Verzahnung 1.1 angeordneten Verbindungsbolzen 1.4 ausgestattet, die zur Aufnahme der Öffnungen 2.2 einer Federscheibe 2 dienen. Die Federscheibe 2 weist, gemäß Fig.3, einen zahnlosen, glatten Außenumfang auf, unter dem auf der kreisförmigen Federscheibe 2 die beabstandeten Öffnungen 2.2 angeordnet sind. Zwischen den Öffnungen 2.2 und der mittigen Öffnung 2.3 sind in radialer Richtung verlaufende, spiralförmige Federflächen ·2.1 angeordnet. Die Federscheibe 2 wird nun unterhalb der Evolventen- Verzahnung 1.1 auf der ringförmigen Scheibenfläche 1.3 der Zahnscheibe 1 mit ihren Öffnungen 2.2 auf die Verbindungsbolzen 1.4 der Zahnscheibe 1 gesteckt und mit der Federscheibe 2 formschlüssig verbunden. Auf einer zentralen Nabe 0 wird die erste Zahnscheibe 1 über ihre mittige Öffnung und die mittige Öffnung 2.3 der Federscheibe 2 aufgesteckt. Nun folgt das Aufschieben einer zweiten Zahnscheibe 1 mit einer zweiten Federscheibe 2 entgegen der Drehrichtung der ersten Federscheibe 1 mit der an dieser ebenfalls entgegen der Drehrichtung der ersten Federscheibe 1 befestigten Federscheibe 2. Diese bilden ein Zahnscheibenpaar mit einer symmetrischen Evolventen-Verzahnung 1.1.1, die aus den asymmetrischen Verzahnungen 1.1 der zwei Zahnscheiben 1 gebildet wird. Die entgegen der Drehrichtung angeordneten Zahnscheiben 1 mit den Federscheiben 2 erzeugen jeweils eine entgegenwirkende Vorspannung zwischen der ersten und zweiten Zahnscheibe 1. Durch das Verschrauben der Zahnscheiben auf der Nabe 0 wird danach eine entgegenwirkende Vorspannung beider Zahnscheiben 1 erzeugt, durch deren Kraft ein Spiel der symmetrischen Evolventen- Verzahnung 1.1.1 am Zahnscheibenpaar nicht mehr möglich ist. Durch, bei Bedarf, weiteres entgegen der jeweiligen Drehrichtung, erfolgendes Aufstecken von den vorbeschriebenen Zahnscheibenpaaren auf die zentrale Nabe 0 und deren Verschraubung entsteht eine Zahnwalze 3 mit einer symmetrischen Evolventen- Verzahnung 3.1, gemäß Fig. 4. Diese greift nun in ein Gegenzahnrad 4 mit Evolventen- Verzahnung 4.1 ein, wobei die Zahnflanken 1.2 der symmetrischen Evolventen- Verzahnung 1.1.1 der Zahnscheibenpaare in die Evolventen- Verzahnung 4.1 eingreifen und gegen die Zahnflanken 4.2 des Gegenzahnrads 4 ohne Spiel wälzen. Fig.5 zeigt in einer Explosionszeichnung die fortlaufende Anordnung einer beliebigen Anzahl von Zahnscheibenpaaren, je nach Erfordernis beim jeweiligen Anwendungsfall.

### Aufstellung der verwendeten Bezugszeichen

0 Nabe
1. Zahnscheibe,
1.1 asymmetrische Evolventen- Verzahnung,
1.1.1 symmetrische Evolventen-Verzahnung eines Zahnscheibenpaars,
1.2 Zahnflanken an Zahnscheibe,
1.3 Kreisfläche der Zahnscheibe,
1.4 Verbindungsbolzen,
2. Federscheibe,
2.1 Spiralförmige Federflächen,
2.2 Öffnungen,
2.3 Mittige Aufnahmeöffnung,
3 Zahnwalze,
3.1 Symmetrische Evolventen- Verzahnung der Zahnwalze,
3.2 Zahnflanken der Zahnwalze,
4 Gegenzahnrad,
4.1Evolventen- Verzahnung des Gegenzahnrads,
4.2Zahnflanken des Gegenzahnrads,

## Patentansprüche

1. Spielfreie Verzahnung, aufweisend mehrere auf einer zentralen Nabe (0) angeordnete, am Außenumfang eine Evolventen- Verzahnung (1.1) mit Zahnflanken (1.2) aufweisende Zahnscheiben (1), die mit den auf der Nabe (0) sitzenden Kreisflächen der Zahnscheiben (1) und einer dazwischen angeordneten Federscheibe (2) versetzt zu den Zahnflanken (1.2) formschlüssig und achsparallel miteinander verbunden sind und gegen Zahnflanken (4.2) eines Gegenzahnrades (4) mit Evolventen- Verzahnung (4.1) unter radialer Vorspannung angelegt sind, **dadurch gekennzeichnet,**
**dass** die Evolventen- Verzahnung (1.1) am Außenumfang jeder Zahnscheibe (1) asymmetrisch angeordnet ist, einseitig auf einer Kreisfläche (1.3) und unterhalb der asymmetrischen Evolventen- Verzahnung (1.1) der Zahnscheibe (1) achsparallel eine Federscheibe (2), mit einem zahnlosen glatten Außenumfang, Öffnungen (2.2), mit darunter in radialer Richtung zu einer mittigen Aufnahmeöffnung (2.3), mehreren beabstandeten spiralförmig verlaufenden Federflächen (2.1), die über Verbindungsbolzen (1.4) mit jeder Zahnscheibe (1) formschlüssig verbunden ist und eine zweite Zahnscheibe (1) mit Federscheibe (2) der vorbeschriebenen Art, entgegengesetzt der Drehrichtung der ersten Zahnscheibe (1) und der ersten Federscheibe (2) angeordnet ist, mit denen ein Zahnscheibenpaar mit gegeneinander gerichteter radialer Vorspannung und einer am Außenumfang spielfreien, symmetrischen Evolventen- Verzahnung (1.1.1) zu bilden ist, das einen mit Bohrungen fluchtenden mittigen Durchbruch aufweist, der mit der zentralen Nabe (0) fest zu verbinden ist,
**dass** durch fortlaufende Anordnung weiterer vorbeschriebener Zahnscheibenpaare, immer entgegengesetzt der jeweiligen letzten Drehrichtung des vorangegangenen Zahnscheibenpaares, eine in ihrer Breite der Anwendung anzupassende Zahnwalze (3) aus mehreren Zahnscheibenpaaren mit einer am Außenumfang angeordneten, spielfreien Evolventen- Verzahnung (3.1) mit radialer Vorspannung zu bilden ist und dass die Zahnflanken (3.2) der symmetrischen Evolventen- Verzahnung (3.1) mehrerer Zahnscheibenpaare gegen die Zahnflanken (4.2) der Evolventen-Verzahnung (4.1) des Gegenzahnrads (4) spielfrei zu wälzen sind.

2. Spielfreie Verzahnung, nach Anspruch 1, **dadurch gekennzeichnet, dass** die Federscheibe (2) eine kreisflächenförmige Scheibe mit einer, stirnseitig am Außenumfang angeordneten, zahnlosen glatten Außenkante und einer mittig angeordneten Aufnahmeöffnung (2.3) ist, zwischen denen unterhalb der glatten Außenkante verlaufende, mehrere beabstandete Öffnungen (2.2) und darunter in radialer Richtung zur Aufnahmeöffnung (2.3) mehrere spiralförmig verlaufende Federflächen (2.1) angeordnet sind, wobei die Öffnungen (2.2) zur formschlüssigen Verbindung der Federscheibe (2) mit den Verbindungsbolzen (1.4) der jeweiligen Zahnscheibe (1) und die mittige Aufnahmeöffnung (2.3) zur spielfreien, achsparallelen Aufnahme der Federscheibe (2) zur Zahnscheibe (1) auf der Nabe (0) vorgesehen ist und die Federflächen (2.1) durch berechenbare Anzahl, Abstände und Kurvenführung zur Erzeugung der jeweils erforderlichen radialen Vorspannung der Zahnscheiben (1) anzupassen sind.

3. Spielfreie Verzahnung, nach Anspruch 1, **dadurch gekennzeichnet, dass** die Zahnwalze (3) auf ihrem stirnseitigen Außenumfang eine durchgehende spielfreie symmetrische Evolventen- Verzahnung (3.1) aufweist, die durch das entgegen der Drehrichtung erfolgte; achsparallele Zusammenfügen von Zahnscheibenpaaren mit symmetrischer Evolventen- Verzahnung (1.1.1) und deren radial gegeneinander erzeugte Vorspannung und durch die formschlüssig an diesen angeordneten, Federscheiben (2) mit spiralförmigen Federflächen (2.1), und deren spielfreier Verschraubung auf der Nabe (0) zu erzeugen ist.

4. Spielfreie Verzahnung, nach einem der vorhergehenden Ansprüche, **dadurch gekennzeichnet, dass** die Abmessungen der Zahnscheiben (1) mit der asymmetrischen Verzahnung (1.1) am Außenumfang, die Federscheiben (2) mit deren Anzahl, Abständen und radialer spiralförmiger Kurvenführung ihrer Federflächen (2.1), sowie die dadurch zu erzeugende radiale Vorspannung an den Zahnscheiben (1) für jeden Anwendungsfall zu berechnen und an beliebige Gegenzahnräder (4) mit Evolventen- Verzahnung (4.1) anzupassen sind.
